# EUROPEAN PATENT SPECIFICATION

(11) **EP 1 101 384 B1**
(45) Date of publication and mention of the grant of the patent: **19.09.2007**
(21) Application number: 99943523.3
(22) Date of filing: 13.07.1999
(51) Int. Cl.: H04Q 7/38, H04M 7/00, H04L 29/06

(54) **SYSTEM AND METHOD FOR LONG DISTANCE BYPASS FOR TERMINATING MOBILE CALLS**
SYSTEM UND VERFAHREN ZUR WEITRÄUMIGEN UMGEHUNG FÜR AN MOBILSTATIONEN GERICHTETE ANRUFE
SYSTÈME ET PROCÉDÉ PERMETTANT LE CONTOURNEMENT LONGUE DISTANCE POUR DES APPELS DESTINÉS À DES TÉLÉPHONES MOBILES

(30) Priority: 29.07.1998 US 124483
(43) Date of publication of application: 23.05.2001
(73) Proprietor: TELEFONAKTIEBOLAGET LM ERICSSON (publ), 164 83 Stockholm (SE)
(72) Inventor: PETTERSSON, Mats, S-139 51 Värmdö (SE)
(74) Representative: Tonscheidt, Andreas
(86) International application number: PCT/SE1999/001266
(87) International publication number: WO 2000/007403

(56) References cited:
- WO-A-95/20299
- WO-A-96/21983
- WO-A-97/27692
- WO-A-97/48246
- WO-A-98/09452
- WO-A-98/48542
- WO-A-99/05830
- US-A- 5 793 762
- "MICOM Voice/IP Gateway to Interoperate with Microsoft Netmeeting 2.0 for Off-net Calling" NEWS RELEASE,28 April 1997 (1997-04-28), XP000208300 http://www.micon.com/press/msnetmtg.htm

## Description

### FIELD OF THE INVENTION

The invention relates generally to wireless telecommunications and, more particularly, to utilizing Internet telephony services to reduce long-distance costs associated with incoming calls to a mobile station that is roaming in a visitor cellular network.

### BACKGROUND OF THE INVENTION

Cellular telecommunications is one of the fastest growing and most demanding telecommunications applications. Today it represents a large and continuously increasing percentage of all new telephone subscriptions around the world. A standardization group, European Telecommunications Standards Institute (ETSI), was established in 1982 to formulate the specifications for the Global System for Mobile Communication (GSM) digital mobile cellular radio system.

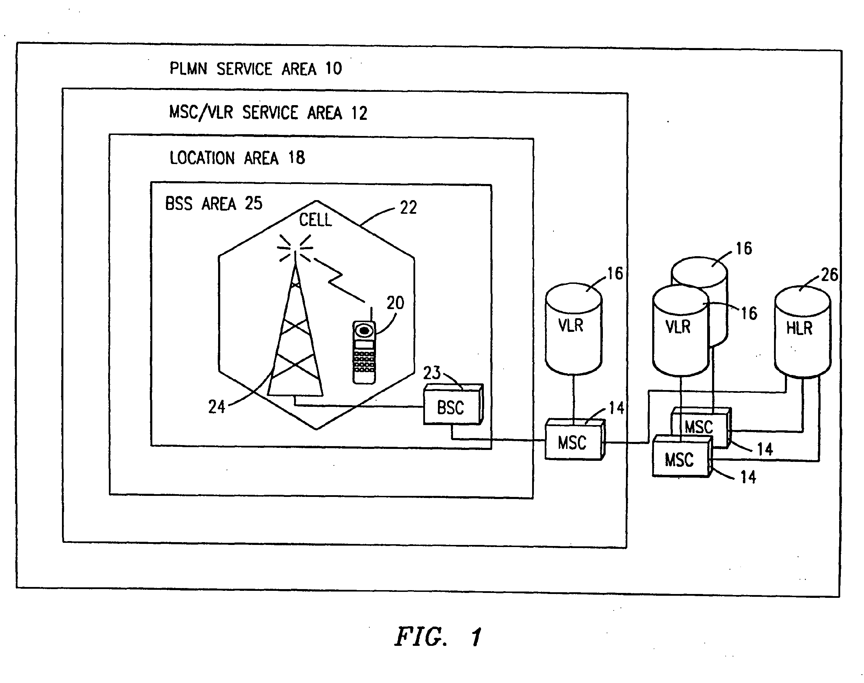

With reference now to FIGURE 1 of the drawings, there is illustrated a GSM Public Land Mobile Network (PLMN), such as wireless network 10, which in turn is composed of a plurality of areas 12, each with a Mobile Services Switching Center (MSC) 14 and an integrated Visitor Location Register (VLR) 16 therein. The MSC/VLR areas 12, in turn, include a plurality of Location Areas (LA) 18, which are defined as that part of a given MSC/VLR area 12 in which a mobile station (MS) 20 may move freely without having to send update location information to the MSC/VLR area 12 that controls the LA 18. Each Location Area 18 is divided into a number of cells 22. Mobile Station (MS) 20 is the physical equipment, e.g., a car phone or other portable phone, used by mobile subscribers to communicate with the wireless network 10, each other, and users outside the subscribed network, both wireline and wireless.

The MSC 14 is in communication with at least one Base Station Controller (BSC) 23, which, in turn, is in contact with at least one Base Transceiver Station (BTS) 24. The BTS 24 is the physical equipment, illustrated for simplicity as a radio tower, that provides radio coverage to the geographical part of the cell 22 for which it is responsible. It should be understood that the BSC 23 may be connected to several BTSs 24, and may be implemented as a stand-alone node or integrated with the MSC 14. In either event, the BSC 23 and BTS 24 components, as a whole, are generally referred to as a Base Station System (BSS) 25.

With further reference to FIGURE 1, the PLMN Service Area or wireless network 10 includes a Home Location Register (HLR) 26, which is a database maintaining all subscriber information, e.g., user profiles, current location information, International Mobile Subscriber Identity (IMSI) numbers, and other administrative information. The HLR 26 may be co-located with a given MSC 14, integrated with the MSC 14, or alternatively can service multiple MSCs 14, the latter of which is illustrated in FIGURE 1.

The VLR 16 is a database containing information about all of the MS's 20 currently located within the MSC/VLR area 12. If an MS 20 roams into a new MSC/VLR area 12, the VLR 16 connected to that MSC 14 will request data about that MS 20 from its home HLR database 26 (simultaneously informing the HLR 26 about the current location of the MS 20). Accordingly, if the user of the MS 20 then wants to make a call, the local VLR 16 will have the requisite identification information without having to reinterrogate the home HLR 26. In the aforedescribed manner, the VLR and HLR databases 16 and 26, respectively, contain various subscriber information associated with a given MS 20.

When a call to an MS 20 is originated by a subscriber within the fixed network or Public Switched Telephone Network (PSTN) (not shown), the call is routed to a Gateway Mobile Services Switching Center (GMSC) (not shown), which operates as an incoming transit exchange for the PLMN 10. The GMSC determines which HLR 26 the MS 20 is registered in and queries that HLR 26 for the location of the MS 20 by sending a "Send Routing Information" message to the HLR 26, using the Mobile Application Part (MAP) protocol, which is the protocol responsible for signaling procedures with the HLR 26. The HLR 26 then fetches the Mobile Station Roaming Number (MSRN) for the MS 20 from the serving MSC/VLR 14/16 and returns this MSRN, along with location information, e.g., the address of the MSC/VLR 14/16, to the GMSC within a "Send Routing Information Result" message using the MAP protocol. The GMSC can then route the incoming call to the serving MSC/VLR 14/16 for call connection.

When an MS 20 is roaming, e.g., the MS 20 is located within a visitor PLMN (not shown), it can be quite expensive for the MS 20 to receive calls, especially if the visitor PLMN is located such that a long-distance call must be set-up between the home PLMN 10 and the visitor PLMN in order for the MS 20 to receive calls. Currently, in order to avoid setting-up a long-distance call, the calling party can select to use Internet telephony services. The Internet is based on the Transmission Control Protocol/Internet Protocol (TCP/IP protocol), which was developed as a standard protocol to allow different types of computers to exchange electronic mail and other files over a network. The TCP/IP Protocol specifies the addressing of nodes on the Internet and provides a method of sending packets of data from one node to another. The TCP or Transmission Control Protocol is an application implemented on top of the Internet Protocol to provide reliable delivery of the data packets.

In order to use the Internet telephony services, the calling party can dial a special number, which routes the call to an Internet Gateway (not shown). This Internet Gateway can then route the call through the Internet using the TCP/IP protocol to another remote Internet Gateway on the other end. This remote Internet Gateway can then route the call back into the PLMN 10 to the GMSC for connection of the call to the called party.

However, neither the calling party nor the called party can influence how the call is routed (via Internet or not) from the GMSC to the roaming MS 20. In addition, even if the calling party could influence the routing, there is no motivation for the calling party to do so since it is the called party (mobile subscriber) that will pay for the long-distance connection between the GMSC and the serving MSC/VLR 14/16.

It is, therefore, an object of the invention to allow a called roaming mobile subscriber to bypass the long-distance connection between the GMSC and serving MSC/VLR by permitting the routing of incoming calls to that roaming mobile subscriber from the GMSC to the serving MSC/VLR through the Internet.

The patent document WO 96/21983 (NOKIA TELECOMMUNICATIONS OY), 18.07.1996, describes routing of data packets between a mobile station and a party connected to an external network via Internet.

### SUMMARY OF THE INVENTION

The present invention is directed to telecommunications systems and methods for reducing the long-distance cost associated with connecting calls to mobile subscribers that are roaming in a visitor PLMN. This is achieved by providing a subscriber feature that uses Internet telephony services to bypass the long-distance connection between the GMSC and the serving MSC/VLR. It should be understood that the term Internet includes intranets and any Internet Protocol (IP)-networks. When an incoming call is routed to the GMSC, the GMSC queries the HLR for routing information for the called mobile station. The HLR then sends back this routing information, along with service categories, to the GMSC. Based on this information, the GMSC can decide how to route the call to the serving MSC/VLR. If, for example, the subscriber has a service category set for "long-distance bypass", and the VLR-number and/or the MSRN indicates that it is possible to reach the serving MSC/VLR via the Internet, then the call can be routed through the Internet to the serving MSC/VLR. Otherwise, the GMSC will route the call in the conventional manner, as is understood in the art. Advantageously, by allowing the mobile subscriber to subscribe to this bypass feature, the mobile subscriber can reduce the long-distance costs associated with incoming calls to the mobile subscriber when the mobile subscriber is roaming.

The advantageous result of the invention is achieved by an inventive node as claimed in independent claim 1 and the corresponding method as claimed in independent claim 10. Further advantageous embodiments are subject of the respective dependent claims.

### BRIEF DESCRIPTION OF THE DRAWINGS

FIGURE 1 is a block diagram of a conventional terrestrially-based wireless telecommunications system;
FIGURE 2 is a block diagram illustrating the routing of an incoming call from a Gateway Mobile Services Switching Center to a Mobile Services Switching Center serving the area that a roaming MS is located in via the Internet, in accordance with preferred embodiments of the present invention; and
FIGURE 3 shows steps in a sample method for routing an incoming call via the Internet to a roaming MS in order to reduce the long-distance costs associated with the call, in accordance with preferred embodiments of the present invention.

### DETAILED DESCRIPTION

The numerous innovative teachings of the present application will be described with particular reference to the presently preferred exemplary embodiments. However, it should be understood that this class of embodiments provides only a few examples of the many advantageous uses of the innovative teachings herein. In general, statements made in the specification of the present application do not necessarily delimit any of the various claimed inventions. Moreover, some statements may apply to some inventive features but not to others.

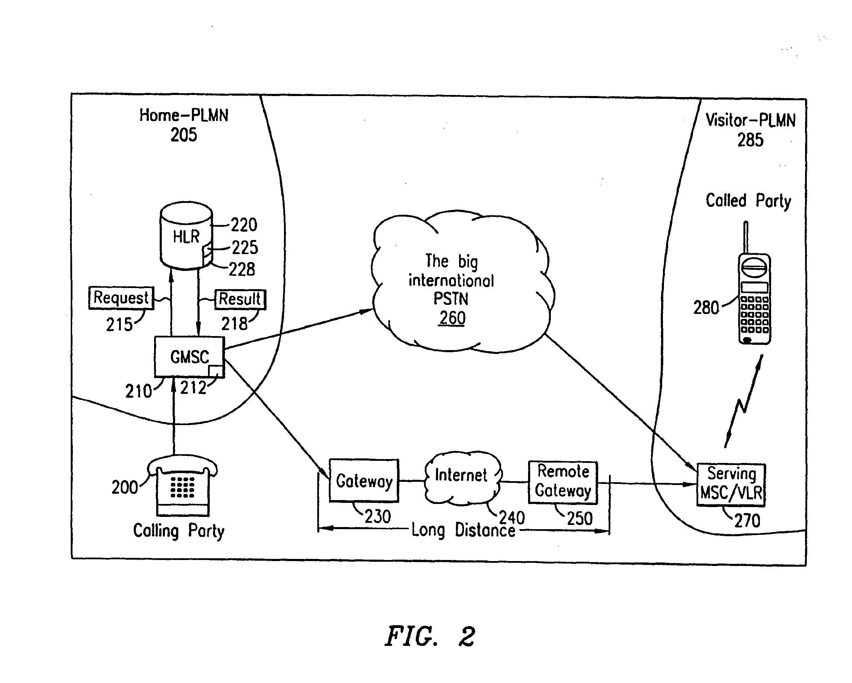

With reference now to FIGURE 2 of the drawings, in order to reduce the long-distance costs for an incoming call to a Mobile Station (MS) 280 which is roaming in a visitor Public Land Mobile Network (PLMN) 285, the mobile subscriber associated with the MS 280 can subscribe to a service category feature 225 which uses Internet telephony services to bypass the long-distance connection between a gateway node or a Gateway Mobile Services Switching Center (GMSC) 210 associated with a home-PLMN 205 and a Mobile Services Switching Center/Visitor Location Register (MSC/VLR) 270 currently serving the MS 280 within the visitor-PLMN 285. It should be understood that the term Internet also refers to Intranet telephony services and/or any Internet Protocol (IP) network. By introducing a terminating service for the mobile subscriber, which can be implemented, for example, by the Intelligent Network (IN), this terminating bypass service can, whenever possible, route the roaming leg, e.g., the connection between the GMSC 210 and the serving MSC/VLR 270, through the Internet 240.

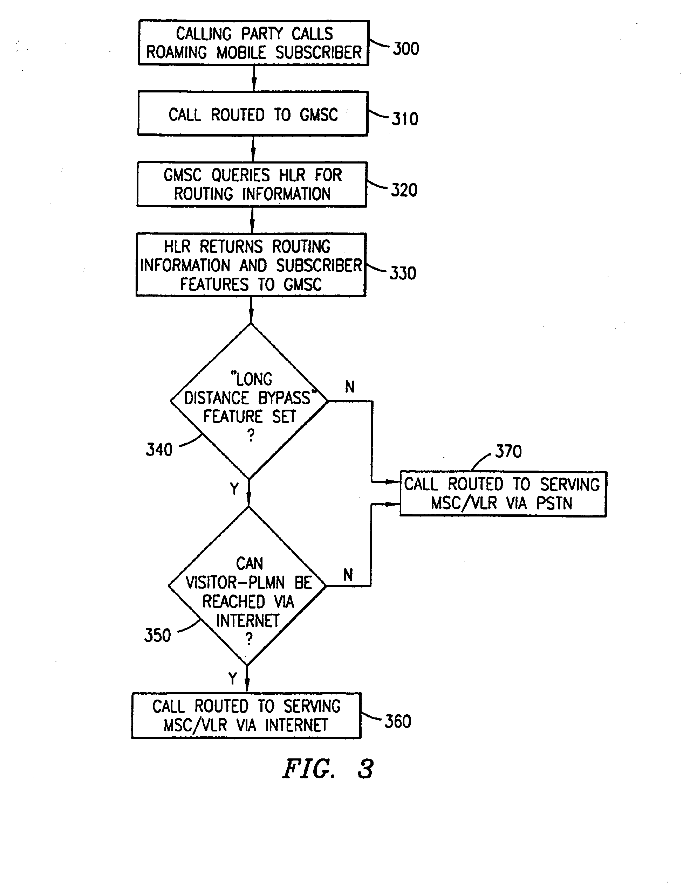

With reference now to FIGURE 3 of the drawings, which will be described in connection with FIGURE 2 of the drawings, when a calling party 200 dials the number associated with the MS 280 (step 300), the call is routed conventionally to the GMSC 210 of the home-PLMN 205 of the called MS 280 (step 310). The GMSC 210 then queries a Home Location Register (HLR) 220 serving the MS 280 for routing information 228 for the MS 280 by sending a "Send Routing Information" message 215 on the Mobile Application Part (MAP) protocol to the HLR 220 (step 320). The HLR 220 then sends back the routing information 228 to the GMSC in a "Send Routing Information Result" message 218 (step 330). The result message 218 can contain, for example, location information, such as the address for the serving MSC/VLR 270 or the Mobile Station Routing Number (MSRN) 228, service categories, such as TICK or T-CSI, and other supplementary service categories, such as "long distance bypass" 225.

Based on the information 225 and 228 contained in the result message 218, the GMSC 210 must then decide how to route the roaming leg to the visitor-PLMN 285 (serving MSC/VLR 270). If, for example, the mobile subscriber has the service category for "long-distance bypass" 225 set (step 340), and the address for the MSC/VLR 270 and/or the MSRN 228 indicates that the visitor-PLMN 285 can be reached via the Internet 240 (step 350), e.g., the visitor-PLMN 285 has an associated Internet Gateway 250, then the incoming call can be routed to the serving MSC/VLR 270 through the Internet 240 (step 360). Otherwise, the GMSC 210 can route the incoming call to the serving MSC/VLR 270 in a conventional manner (step 370), e.g., through the international Public Switched Telephone Network (PSTN) 260.

In preferred embodiments, the GMSC 210 can determine whether the visitor-PLMN 285 can be reached via the Internet 240 by consulting a table 212 within the GMSC 210 which contains addresses, such as VLR or MSRN numbers 228, along with associated Internet indications of whether the visitor-PLMN's 285 associated with the VLR or MSRN numbers 228 can be reached via the Internet 240. It should be noted that the table 212 can be implemented within an external database, such as an Intelligent Network (IN) node (not shown), e.g., a Service Control Point (SCP), instead of within the GMSC 210 itself. Thus, when the GMSC 210 receives an indication that the subscriber has the service category for "long-distance bypass" 225 set, and determines that the VLR or MSRN number 228 is within a visitor-PLMN 285, the GMSC 210 can query the SCP for an indication of whether the visitor-PLMN 285 can be reached via the Internet 240.

If the table 212 within either the GMSC 210 or an external node indicates that the visitor-PLMN 285 can be reached through the Internet 240, the GMSC can retrieve from the table 212 the routing information 228, e.g., the VLR or MSRN number, along with a prefixed number, which can be, for example, an address for an Internet Gateway 230 associated with the GMSC 210. For example, the received VLR or MSRN number 228 in the result message 218 can be compared with VLR or MSRN numbers within the table 212 to obtain a prefixed VLR or MSRN number. The prefix can be any number or set of numbers that the GMSC 210 can recognize as an indication that the call should be routed to the visitor-PLMN 285 via the Internet 240.

Once the GMSC 210 determines that the call can be routed to the visitor-PLMN 285 through the Internet 240, the GMSC 210 then routes the call to the Internet Gateway 230 associated with the GMSC 210, using, for example, the prefixed number on the VLR or MSRN number 228. The Internet Gateway 230 can then convert the VLR or MSRN number 228 into an Internet Protocol (IP) address for routing the call to the remote Internet Gateway 250 associated with the visitor-PLMN 285. The original Internet Gateway 230 then also converts the voice and signaling information into IP packets for delivery to the remote Internet Gateway 250 through the Internet 240. When the voice and signaling information is received by the remote Internet Gateway 250, the remote Internet Gateway 250 re-converts the IP address into the VLR or MSRN number 228, re-converts the IP packets into the voice and signaling information, and routes the call to the serving MSC/VLR 270 within the visitor-PLMN 285 using the VLR or MSRN number 228. The serving MSC/VLR 270 can then connect the call to the called MS 280. However, if Internet routing fails and the call cannot be routed to the remote Internet Gateway 250 for any number of reasons, then the GMSC 210 can route the call normally to the serving MSC/VLR 270 through the international PSTN 260.

It should be noted that the bypass feature 225 can be set by the subscriber such that incoming calls are not always routed via the Internet 240. For example, the feature 225 can indicate that incoming calls are to be routed via the Internet 240 only at certain times of the day, e.g., between the hours of 8:00 a.m. and 5:00 p.m. Furthermore, the subscriber can indicate the quality of service (QOS) required for the Internet connection, e.g., the speech quality of the call. The mobile subscriber can, for example, indicate in the subscriber profile sent to the GMSC 210 in the return message 218 that a specific Internet Gateway (not shown) which provides certain guarantees about the speech quality is to be used instead of the Internet Gateway 230 associated with the GMSC 210. The GMSC 210 will then only route the call to that specific Internet Gateway. In this way, the subscriber can ensure that all calls routed through the Internet 240 maintain a certain standard of speech quality. However, the mobile subscriber will typically be billed for requesting an Internet Gateway different than the normal Internet Gateway used by the GMSC. This "long distance bypass" feature 225 can be further tailored in numerous ways to meet the demands of individual subscribers and network providers.

In addition, it should be noted that the calling party 200 can prevent the call from being routed through the Internet 240 in cases where the calling party 200 is concerned about the speech quality or the security of the call. The calling party 200 can prevent the GMSC 210 from routing the call via the Internet 240 by, for example, dialing a service code, e.g., "*xx", prior to dialing the called party number. The calling party 200 would then preferably have to pay for the long-distance part of the call. Alternatively, if the calling party 200 is concerned about the speech quality but does not want prevent the call from being routed through the Internet 240, the calling party 200 can also request a specific Internet Gateway for the Internet connection, which the calling party would then preferably be billed for.

For example, it should be understood that the systems and methods disclosed herein can be utilized by any cellular network, including, but not limited to the GSM network, the Personal Digital Cellular (PDC) network, the Personal Communications Systems (PCS) network, the Advanced Mobile Phone System (AMPS) network and the Digital-AMPS (D-AMPS) network.

## Claims

1. A node (210) of a telecommunications system comprising:
• means for receiving an incoming call to a mobile terminal (280) associated with a home network (205) and located within a visitor network (285), the node being part of said home network (205);
• means for querying (215) a database (220) for routing information for said mobile terminal (280);
• means for determining, using the result (218;228,225) of the query, whether the mobile terminal may be reached via an Internet Gateway (230) by analyzing whether a long distance bypass service category (225) is set or not, whereby the means for determining further take into account whether said visitor network (285) can be reached via an Internet (240) by analyzing the routing information (228); and
• means for routing said call to said Internet Gateway (230) when said means for determining determines that said incoming call can be routed through said Internet.

2. The node of Claim 1, wherein said node is a Gateway Mobile Services Switching Center (GMSC).

3. The node of Claim 1 or 2, wherein said routing information is a mobile station roaming number.

4. The node of Claim 1 or 2, wherein said routing information is a visitor location register number, said visitor location register number being associated with a visitor location register serving an area that said mobile terminal is located in.

5. The node according to anyone of Claims 1 to 4, wherein said means for determining determines whether said incoming call can be routed to said visitor network through said Internet by using a table (212), said table containing a plurality of addresses and associated Internet indications, said routing information being within said plurality of addresses, said means for determining indexing on said routing information within said plurality of addresses and obtaining said associated Internet indication.

6. The node according to Claim 5, wherein said means for determining determines that said incoming call can be routed to said visitor network through said Internet when said Internet indication associated with said routing information is a prefix along with said routing information, said incoming call being routed from said node to said Internet Gateway using said prefix.

7. The node according to Claim 5, wherein said means for determining determines that said incoming call cannot be routed to said visitor network through said Internet when said Internet indication associated with said routing information is set to "no remote Internet Gateway available".

8. The node according to anyone of Claims 5 to 7, wherein said incoming call is routed from said node to said visitor network through an international Public Switched Telephone Network, further referred to as, PSTN when said Internet indication associated with said routing information is set to "no remote Internet Gateway available", said incoming call having long-distance charges associated therewith when said incoming call is routed through said PSTN.

9. A database of a telecommunications system comprising:
• means for receiving a query for routing information for a mobile terminal from a node;
• means for providing a result to said query, whereby the result includes information whether the mobile terminal may be reached via an Internet Gateway (230) by means of a long distance bypass service category (225) being set or not.

10. A method for operating a node (210) of a telecommunications system, the method comprising the steps of:
• receiving an incoming call to a mobile terminal (280) associated with a home network (205) and located within a visitor network (285), the node being part of said home network (205);
• querying (215) a database (220) for routing information for said mobile terminal (280);
• determining, using the result (218;228,225) of the query, whether the mobile terminal may be reached via an Internet Gateway (230) by analyzing whether a long distance bypass service category (225) is set or not, whereby the determination further takes into account whether said visitor network (285) can be reached via an Internet (240) by analyzing the routing information (228); and
• routing said call to said Internet Gateway (230) when said determination indicates that said incoming call can be routed through said Internet.

11. The method of Claim 10, wherein said node is a Gateway Mobile Services Switching Center (GMSC).

12. The method of Claim 10 or 11, wherein said routing information is a mobile station roaming number.

13. The method of Claim 10 or 11, wherein said routing information is a visitor location register number, said visitor location register number being associated with a visitor location register serving an area that said mobile terminal is located in.

14. The method according to anyone of Claims 10 to 13, wherein said determining step further comprises determining whether said incoming call can be routed to said visitor network through said Internet by using a table (212), said table containing a plurality of addresses and associated Internet indications, said routing information being within said plurality of addresses, said means for determining indexing on said routing information within said plurality of addresses and obtaining said associated Internet indication.

15. The method according to Claim 14, wherein said determining step further comprises that said incoming call can be routed to said visitor network through said Internet when said Internet indication associated with said routing information is a prefix along with said routing information, said incoming call being routed from said node to said Internet Gateway using said prefix.

16. The method according to anyone of Claims 14 or 15, wherein said determining step further comprises that said incoming call cannot be routed to said visitor network through said Internet when said Internet indication associated with said routing information is set to "no remote Internet Gateway available".

17. The method according to anyone of Claims 14 to 16, wherein said incoming call is routed from said node to said visitor network through an international Public Switched Telephone Network, further referred to as, PSTN when said Internet indication associated with said routing information is set to "no remote Internet Gateway available", said incoming call having long-distance charges associated therewith when said incoming call is routed through said PSTN.

18. A method for operating a database of a telecommunications system comprising the steps of:
• receiving a query for routing information for a mobile terminal from a node;
• providing a result to said query, whereby the result includes information whether the mobile terminal may be reached via an Internet Gateway (230) by means of a long distance bypass service category (225) being set or not.

## Patentansprüche

1. Knoten (210) eines Telekommunikationssystems, welcher umfasst:
• Mittel zum Empfangen eines ankommenden Rufes für ein mobiles Endgerät (280), das einem Heimatnetz (205) zugehörig ist und sich in einem Besuchernetz (285) befindet, wobei der Knoten Teil des Heimatnetzes (205) ist;
• Mittel zum Abfragen (215) einer Datenbank (220) nach Routing-Information für das mobile Endgerät (280);
• Mittel zum Bestimmen, unter Verwendung des Ergebnisses (218; 228, 225) der Abfrage, ob das mobile Endgerät über ein Internet-Gateway (230) erreicht werden kann, durch Analysieren, ob eine Dienstkategorie Fernverbindungs-Umgehung (225) eingestellt ist oder nicht, wobei die Mittel zum Bestimmen ferner durch Analysieren der Routing-Information (228) berücksichtigen, ob das Besuchernetz (285) über ein Internet (240) erreicht werden kann; und
• Mittel für das Routing des Rufes zu dem Internet-Gateway (230), wenn das Mittel zum Bestimmen bestimmt, dass der ankommende Ruf über das Internet geroutet werden kann.

2. Knoten nach Anspruch 1, wobei der Knoten eine Gateway-Vermittlungsstelle (Gateway Mobile Services Switching Center, GMSC) ist.

3. Knoten nach Anspruch 1 oder 2, wobei die Routing-Information eine Mobilstations-Roamingnummer (Mobile Station Roaming Number) ist.

4. Knoten nach Anspruch 1 oder 2, wobei die Routing-Information eine Besucherregister-Nummer ist, wobei die Besucherregister-Nummer zu einem Besucherregister gehört, das einen Bereich bedient, in welchem sich das mobile Endgerät befindet.

5. Knoten nach einem der Ansprüche 1 bis 4, wobei das Mittel zum Bestimmen unter Verwendung einer Tabelle (212) bestimmt, ob der ankommende Ruf über das Internet zu dem Besuchernetz geroutet werden kann, wobei die Tabelle mehrere Adressen und zugehörige Internet-Angaben enthält, wobei sich die Routing-Information innerhalb der mehreren Adressen befindet, wobei die Mittel zum Bestimmen die Routing-Information innerhalb der mehreren Adressen indizieren und die zugehörige Internet-Angabe erhalten.

6. Knoten nach Anspruch 5, wobei das Mittel zum Bestimmen bestimmt, dass der ankommende Ruf über das Internet zu dem Besuchernetz geroutet werden kann, wenn die zu der Routing-Information gehörige Internet-Angabe eine Vorwahlnummer zusammen mit der Routing-Information ist, wobei der ankommende Ruf unter Verwendung der Vorwahlnummer von dem Knoten zu dem Internet-Gateway geroutet wird.

7. Knoten nach Anspruch 5, wobei das Mittel zum Bestimmen bestimmt, dass der ankommende Ruf nicht über das Internet zu dem Besuchernetz geroutet werden kann, wenn die zu der Routing-Information gehörige Internet-Angabe auf "kein entferntes Internet-Gateway verfügbar" eingestellt ist.

8. Knoten nach einem der Ansprüche 5 bis 7, wobei der ankommende Ruf von dem Knoten zu dem Besuchernetz über ein internationales öffentliches Telefonwählnetz, im Weiteren als PSTN (Public Switched Telephone Network) bezeichnet, geroutet wird, wenn die zu der Routing-Information gehörige Internet-Angabe auf "kein entferntes Internet-Gateway verfügbar" eingestellt ist, wobei mit dem ankommenden Ruf Fernverbindungs-Gebühren verknüpft sind, wenn der ankommende Ruf über das PSTN geroutet wird.

9. Datenbank eines Telekommunikationssystems, welche umfasst:
• Mittel zum Empfangen einer Abfrage nach Routing-Information für ein mobiles Endgerät von einem Knoten;
• Mittel zum Bereitstellen eines Ergebnisses der Abfrage, wobei das Ergebnis Informationen enthält, ob das mobile Endgerät über ein Internet-Gateway (230) erreicht werden kann, **dadurch**, dass eine Dienstkategorie Fernverbindungs-Umgehung (225) eingestellt ist oder nicht.

10. Verfahren zum Betreiben eines Knotens (210) eines Telekommunikationssystems, wobei das Verfahren die folgenden Schritte umfasst:
• Empfangen eines ankommenden Rufes für ein mobiles Endgerät (280), das einem Heimatnetz (205) zugehörig ist und sich in einem Besuchernetz (285) befindet, wobei der Knoten Teil des Heimatnetzes (205) ist;
• Abfragen (215) einer Datenbank (220) nach Routing-Information für das mobile Endgerät (280);
• Bestimmen, unter Verwendung des Ergebnisses (218; 228, 225) der Abfrage, ob das mobile Endgerät über ein Internet-Gateway (230) erreicht werden kann, durch Analysieren, ob eine Dienstkategorie Fernverbindungs-Umgehung (225) eingestellt ist oder nicht, wobei die Bestimmung ferner durch Analysieren der Routing-Information (228) berücksichtigt, ob das Besuchernetz (285) über ein Internet (240) erreicht werden kann; und
• Routing des Rufes zu dem Internet-Gateway (230), wenn die Bestimmung anzeigt, dass der ankommende Ruf über das Internet geroutet werden kann.

11. Verfahren nach Anspruch 10, wobei der Knoten eine Gateway-Vermittlungsstelle (Gateway Mobile Services Switching Center, GMSC) ist.

12. Verfahren nach Anspruch 10 oder 11, wobei die Routing-Information eine Mobilstations-Roamingnummer (Mobile Station Roaming Number) ist.

13. Verfahren nach Anspruch 10 oder 11, wobei die Routing-Information eine Besucherregister-Nummer ist, wobei die Besucherregister-Nummer zu einem Besucherregister gehört, das einen Bereich bedient, in welchem sich das mobile Endgerät befindet.

14. Verfahren nach einem der Ansprüche 10 bis 13, wobei der Schritt des Bestimmens ferner das Bestimmen unter Verwendung einer Tabelle (212) umfasst, ob der ankommende Ruf über das Internet zu dem Besuchernetz geroutet werden kann, wobei die Tabelle mehrere Adressen und zugehörige Internet-Angaben enthält, wobei sich die Routing-Information innerhalb der mehreren Adressen befindet, wobei die Mittel zum Bestimmen die Routing-Information innerhalb der mehreren Adressen indizieren und die zugehörige Internet-Angabe erhalten.

15. Verfahren nach Anspruch 14, wobei der Schritt des Bestimmens ferner umfasst, dass der ankommende Ruf über das Internet zu dem Besuchernetz geroutet werden kann, wenn die zu der Routing-Information gehörige Internet-Angabe eine Vorwahlnummer zusammen mit der Routing-Information ist, wobei der ankommende Ruf unter Verwendung der Vorwahlnummer von dem Knoten zu dem Internet-Gateway geroutet wird.

16. Verfahren nach einem der Ansprüche 14 oder 15, wobei der Schritt des Bestimmens ferner umfasst, dass der ankommende Ruf nicht über das Internet zu dem Besuchernetz geroutet werden kann, wenn die zu der Routing-Information gehörige Internet-Angabe auf "kein entferntes Internet-Gateway verfügbar" eingestellt ist.

17. Verfahren nach einem der Ansprüche 14 bis 16, wobei der ankommende Ruf von dem Knoten zu dem Besuchernetz über ein internationales öffentliches Telefonwählnetz, im Weiteren als PSTN (Public Switched Telephone Network) bezeichnet, geroutet wird, wenn die zu der Routing-Information gehörige Internet-Angabe auf "kein entferntes Internet-Gateway verfügbar" eingestellt ist, wobei mit dem ankommenden Ruf Fernverbindungs-Gebühren verknüpft sind, wenn der ankommende Ruf über das PSTN geroutet wird.

18. Verfahren zum Betreiben einer Datenbank eines Telekommunikationssystems, welches die folgenden Schritte umfasst:
• Empfangen einer Abfrage nach Routing-Information für ein mobiles Endgerät von einem Knoten;
• Bereitstellen eines Ergebnisses der Abfrage, wobei das Ergebnis Informationen enthält, ob das mobile Endgerät über ein Internet-Gateway (230) erreicht werden kann, **dadurch**, dass eine Dienstkategorie Fernverbindungs-Umgehung (225) eingestellt ist oder nicht.

## Revendications

1. Noeud (210) d'un système de télécommunication comprenant :
- Un moyen pour recevoir un appel entrant vers un terminal mobile (280) associé à un réseau de rattachement (205) et situé à l'intérieur d'un réseau visiteur (285), le noeud faisant partie dudit réseau de rattachement (205) ;
- Un moyen pour interroger (215) une base de données (220) pour router des informations destinées audit terminal mobile (280) ;
- Un moyen pour déterminer, en utilisant le résultat (218 ;228,225) de l'interrogation, si le terminal mobile peut être atteint via une passerelle Internet (230) en analysant si une catégorie de service de contournement longue distance (225) est réglée ou non, moyennant quoi le moyen pour déterminer prend en outre en compte si ledit réseau visiteur (285) peut être atteint via un Internet (240) en analysant l'information de routage (228) ; et
- Un moyen pour router ledit appel vers ladite passerelle Internet (230) lorsque ledit moyen de détermination détermine que ledit appel entrant peut être routé via ledit Internet.

2. Noeud de la revendication 1, moyennant quoi ledit noeud est une passerelle de centre de commutation pour les services mobiles (GMSC).

3. Noeud de la revendication 1 ou 2, moyennant quoi ladite information de routage est un numéro itinérant de station mobile.

4. Noeud de la revendication 1 ou 2, moyennant quoi ladite information de routage est un numéro de registre de localisation visiteur, ledit numéro de registre de localisation visiteur étant associé à un registre de localisation visiteur desservant une zone dans laquelle ledit terminal mobile est situé.

5. Noeud selon une quelconque des revendications 1 à 4, moyennant quoi ledit moyen de détermination détermine si ledit appel entrant peut être routé vers ledit réseau visiteur via ledit Internet en utilisant une table (212), ladite table contenant une pluralité d'adresses et d'indications Internet associées, ladite information de routage étant comprise dans ladite pluralité d'adresses, ledit moyen de détermination s'indexant sur ladite information de routage à l'intérieur de ladite pluralité d'adresses et obtenant ladite indication Internet associée.

6. Noeud selon la revendication 5, moyennant quoi ledit moyen de détermination détermine que ledit appel entrant peut être routé vers ledit réseau visiteur via ledit Internet lorsque ladite indication Internet associée à ladite information de routage est un préfixe conjointement à ladite information de routage, ledit appel entrant étant routé depuis ledit noeud vers ladite passerelle Internet en utilisant ledit préfixe.

7. Noeud selon la revendication 5, moyennant quoi ledit moyen de détermination détermine que ledit appel entrant ne peut pas être routé vers ledit réseau visiteur via ledit Internet lorsque ladite indication Internet associée à ladite information de routage est réglée sur « aucune passerelle Internet distante disponible ».

8. Noeud selon une quelconque des revendications 5 à 7, moyennant quoi ledit appel entrant est routé dudit noeud audit réseau visiteur via un réseau téléphonique public commuté international, également désigné comme un PSTN, lorsque ladite indication Internet associée à ladite information de routage est réglée sur « aucune passerelle Internet distante disponible », ledit appel entrant se voit associer des tarifs longue distance lorsque ledit appel entrant est routé via ledit PSTN.

9. Base de données d'un système de télécommunication comprenant :
- Un moyen pour recevoir une interrogation d'information de routage d'un terminal mobile en provenance d'un noeud ;
- Un moyen pour fournir un résultat à ladite interrogation, moyennant quoi le résultat inclut une information de ce que le terminal mobile peut être atteint via une passerelle Internet (230) au moyen d'une catégorie de service de contournement longue distance (225) étant réglée ou non.

10. Procédé de fonctionnement d'un noeud (210) d'un système de télécommunication, le procédé comprenant les étapes consistant à :
- Recevoir un appel entrant vers un terminal mobile (280) associé à un réseau de rattachement (205) et situé à l'intérieur d'un réseau visiteur (285), le noeud faisant partie dudit réseau de rattachement (205) ;
- Interroger (215) une base de données (220) au sujet de l'information de routage dudit terminal mobile (280) ;
- Déterminer, en utilisant (218 ;228,225) l'interrogation, si le terminal mobile peut être atteint via une passerelle Internet (230) en analysant si une catégorie de service de contournement longue distance (225) est réglée ou non, moyennant quoi la détermination prend en outre en compte si ledit réseau visiteur (285) peut être atteint via un Internet (240) en analysant l'information de routage (228) ; et
- Router ledit appel vers ladite passerelle Internet (230) lorsque ladite détermination indique que ledit appel entrant peut être routé via ledit Internet.

11. Procédé selon la revendication 10, dans lequel ledit noeud est une passerelle de centre de commutation pour les services mobiles (GMSC).

12. Procédé selon la revendication 10 ou 11, dans lequel ladite information de routage est un numéro itinérant de station mobile.

13. Procédé selon la revendication 10 ou 11, dans lequel ladite information de routage est un numéro de registre de localisation visiteur, ledit numéro de registre de localisation visiteur étant associé à un registre de localisation visiteur desservant une zone dans laquelle ledit terminal mobile est situé.

14. Procédé selon une quelconque des revendications 10 à 13, dans lequel ladite étape de détermination comprend en outre la détermination de ce que ledit appel entrant peut être routé vers ledit réseau visiteur via ledit Internet en utilisant une table (212), ladite table contenant une pluralité d'adresses et d'indications Internet associées, ladite information de routage étant comprise dans ladite pluralité d'adresses, ledit moyen de détermination s'indexant sur ladite information de routage à l'intérieur de ladite pluralité d'adresses et obtenant ladite indication Internet associée.

15. Procédé selon la revendication 14, dans lequel ladite étape de détermination comprend en outre que ledit appel entrant peut être routé vers ledit réseau visiteur via ledit Internet lorsque ladite indication Internet associée à ladite information de routage est un préfixe conjointement à ladite information de routage, ledit appel entrant étant routé depuis ledit noeud vers ladite passerelle Internet en utilisant ledit préfixe.

16. Procédé selon la revendication 14 ou 15, dans lequel ladite étape de détermination comprend en outre que ledit appel entrant ne peut pas être routé vers ledit réseau visiteur via ledit Internet lorsque ladite indication Internet associée à ladite information de routage est réglée sur « aucune passerelle Internet distante disponible ».

17. Procédé selon une quelconque des revendications 14 à 16, dans lequel ledit appel entrant est routé dudit noeud audit réseau visiteur via un réseau téléphonique public commuté international, également désigné comme un PSTN, lorsque ladite indication Internet associée à ladite information de routage est réglée sur « aucune passerelle Internet distante disponible », ledit appel entrant se voit associer des tarifs longue distance lorsque ledit appel entrant est routé via ledit PSTN.

18. Procédé de fonctionnement d'une base de données d'un système de télécommunication comprenant les étapes consistant à :
- Recevoir une interrogation d'information de routage d'un terminal mobile en provenance d'un noeud ;
- Fournir un résultat à ladite interrogation, moyennant quoi le résultat inclut une information de ce que le terminal mobile peut être atteint via une passerelle Internet (230) au moyen d'une catégorie de service de contournement longue distance (225) étant réglée ou non.
